# EUROPÄISCHE PATENTANMELDUNG

(11) **EP 0 884 107 A2**
(43) Veröffentlichungstag der Anmeldung: **16.12.1998**
(21) Anmeldenummer: 98108286.0
(22) Anmeldetag: 07.05.1998
(51) Int. Cl.: B03B 9/06

(54) **Verfahren und Vorrichtung zur Aufbereitung einer Schredderleichtfraktion mit Metallteilen**

(30) Priorität: 12.06.1997 DE 19724860
(71) Anmelder: Noell-KRC Energie- und Umwelttechnik GmbH, 04435 Schkeuditz (DE)
(72) Erfinder: Spanke, Volker, Dr, rer.-nat., 38259 Salzgitter (DE)
(74) Vertreter: Lüdtke, Frank

(57) **Zusammenfassung**

Die Erfindung betrifft ein Verfahren zur Aufbereitung einer Shredderleichtfraktion mit Metallteilen mittels Zerkleinerung, Klassierung und Sortierung für eine thermische Verwertung, bei der eine Shredderleichtfraktion, bestehend aus einem undefinierten Materialgemisch einer Zerkleinerungsstufe ≤ 20 mm aufgegeben wird, die Zerkleinerungsprodukte zunächst einer Fe-Abscheidung und danach einer NE-Abscheidung unterzogen werden, die nichtabgeschiedene Fraktion solange einer weiteren Zerkleinerungsstufe mit anschließender Fe-Abscheidung und anschließender NE-Abscheidung unterzogen wird, bis neben Fe- und NE-Konzentraten ein Reststoff entsteht, der einer thermischen Verwertung zugeführt werden kann.
Neben dem Verfahren wird auch eine Vorrichtung zum Betreiben des Verfahrens geschützt.

## Beschreibung

Die Erfindung betrifft ein Verfahren zur Aufbereitung einer Shredderleichtfraktion entsprechend dem Oberbegriff des 1. Patentanspruches und eine Vorrichtung zur Durchführung des Verfahrens.

Das Verfahren ist überall dort einsetzbar, wo ein undefiniertes zerkleinertes Materialgemisch so aufbereitet werden soll, daß ein Eisen- und ein Nichteisenkonzentrat entstehen und die verbleibenden Reststoffe einer thermischen Verwertung zugeführt werden sollen.

Aus *DE 41 00 346 A1* ist ein Verfahren zur mechanischen Aufbereitung von unsortiertem Geräteschrott bekannt, bei dem zunächst eine manuelle Zerlegung der Geräte erfolgt und nach einer Vorzerkleinerung der elektrischen und elektronischen Bauteile eine Zerkleinerung mit einer anschließenden Magnetscheidung und einer Abtrennung der Nichteisen-Metallanteile erfolgt. Das vorgeschlagene Verfahren ist allerdings nur dort anwendbar, wo Geräte mit elektrischen und elektronischen Bestandteilen mechanisch aufbereitet werden sollen.

Weiterhin ist aus *DE 44 26 503 C2* ein Verfahren zur Aufbereitung von Shredderleichtmüll bekannt, bei dem in einer ersten feineren Siebung eine Fein-, eine Mittel- und eine Grobfraktion gewonnen werden, wobei aus der Grobfraktion eine Fe-Fraktion gewonnen wird. Das Verfahren hat den Nachteil, daß sich damit undefinierte zerkleinerte Materialgemische nicht erfolgreich so aufbereiten lassen, daß neben verwertbaren Eisen- und Nichteisenkonzentraten mit einem wirtschaftlichen Verfahren thermisch verwertbare Reststoffe herstellbar sind.

Es ist daher Aufgabe der Erfindung, ein Verfahren zu entwickeln, mit dem eine Shredderleichtfraktion von eisen- und nichteisenmetallischen Bestandteilen auf wirtschaftliche Weise so befreit wird, daß die verbleibenden Reststoffe ohne störende metallische Bestandteile einer thermischen Verwertung zuführbar sind.

Diese Aufgabe wird durch ein Verfahren nach den Merkmalen des 1. Patentanspruches gelöst. Unteransprüche geben die vorteilhafte Ausgestaltung des Verfahrens wieder.

Weiterhin beschreiben die Merkmale des 12. Patentanspruches eine Vorrichtung zur Durchführung des Verfahrens.

Die erfindungsgemäße Lösung sieht vor, daß eine Shredderleichtfraktion, bestehend aus einem undefinierten Materialgemisch einer Zerkleinerungsstufe aufgegeben wird. Vor dem Aufgeben auf diese Zerkleinerungsstufe ist es vorteilhaft, größere Metallteile, wie Stahlkugeln oder andere massive Metallteile, auszuhalten. Dieses Aushalten kann vorteilhafterweise mittels induktivem Metallsensor erfolgen.

Die Zuführung der Shredderleichtfraktion in die erste Zerkleinerungsstufe kann vorteilhafterweise mittels Scharniergutförderer erfolgen.

In einer ersten Zerkleinerungsstufe, welche eine Rotorschere darstellen kann, wird das Materialgemisch auf eine Größe ≤ 20 mm zerkleinert.

Die Zerkleinerungsprodukte werden zunächst einer Eisenabscheidung und danach einer Nichteisenmetall-Abscheidung zugeführt.

Die Eisenabscheidung kann mittels Überbandmagnetscheider erfolgen. Für die Nichteisenabscheidung bietet sich eine Trennung mittels Lufttrennherd an. Da dieses Aggregat nur innerhalb ganz bestimmter Korngrößenklassen sehr gut arbeitet, ist es vorteilhaft, vor diesem Lufttrennherd bei einem breiten Körnungsband eine Klassierung in enge Fraktionen vorzunehmen. Nach der ersten Zerkleinerungsstufe kann der Einsatz eines Wirbelstromscheiders zur NE-Abscheidung vorteilhaft sein.

Vorteilhaft ist es weiterhin, sowohl die Eisen- als auch die Nichteisenmetall-Fraktion nach der Abscheidung anzureichern, um ihren Wertstoffgehalt weiter zu erhöhen.

Die nichtabgeschiedene Fraktion wird dann einer weiteren Zerkleinerungsstufe unterzogen, wonach eine wiederholte Eisen- und anschließende Nichteisenabscheidung erfolgt. Diese Verfahrensstufen werden solange durchlaufen, bis neben den Eisen- und Nichteisenmetall-Konzentraten ein Reststoff entsteht, der einer thermischen Verwertung zugeführt werden kann.

Bei den üblicherweise vorliegenden, undefinierten Metallgemischen, die auf diese Weise aufbereitet werden, wird es erforderlich sein, drei hintereinanderfolgende Zerkleinerungsstufen anzuordnen.

Dabei ist es vorteilhaft, das Material in einer ersten Zerkleinerungsstufe auf ≤ 20 mm zu zerkleinern, in einer zweiten Zerkleinerungsstufe das Material auf ≤ 10 mm zu zerkleinern und in einer weiteren Zerkleinerungsstufe das Material auf ≤ 2mm zu zerkleinern.

Weiterhin ist es vorteilhaft, die Klassierung des zerkleinerten Materials bei 5 mm vorzunehmen, da eine Nichteisenmetall-Anreicherung mittels Lufttrennherd bei diesem Verfahren nicht vorteilhaft mit dem gesamten Zerkleinerungsmaterial ≤ 10 mm durchführbar ist.

Weiterhin ist es vorteilhaft, das Verfahren so zu gestalten, daß alle Zerkleinerungs- und Klassieraggregate entstaubt und die Endprodukte der Entstaubung, gemeinsam mit allen anderen Produkten des Verfahrens, der thermischen Verwertung zurgeführt werden.

Für die Feinzerkleinerung der zweiten und dritten Zerkleinerungsstufe ist es vorteilhaft, eine Hammermühle als Zerkleinerungsaggregat einzusetzen.

Nachfolgend wird die Erfindung an 3 Figuren und einem Ausführungsbeispiel näher erläutert. Die Figuren beschreiben:
- Fig. 1: Verfahrensstammbaum einer Shredderleichtfraktion mit 3 Zerkleinerungsstufen,
- Fig. 2: Verfahrenstammbaum für eine Aufbereitung mit weniger als 3 Zerkleinerungsstufen,
- Fig. 3: Blockschaltbild mit angenommener Produktverteilung aus Fig. 2.

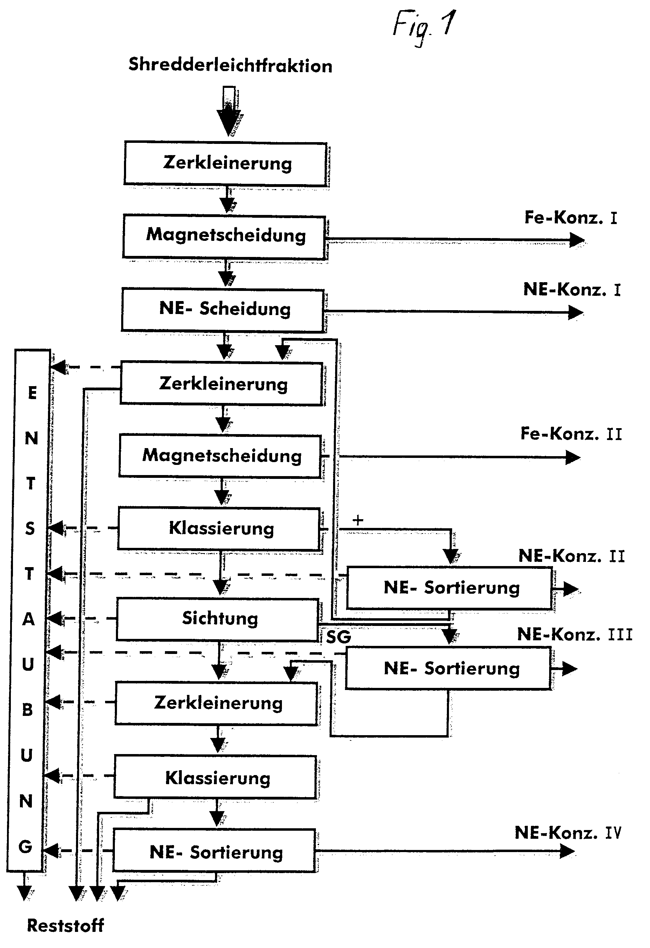

Der Stammbaum des Verfahrens ist in Fig. 1 dargestellt. Die Shredderleichtfraktion einer Kraftfahrzeugverwertung wird über ein Zuführaggregat, einen Scharniergutförderer einer Rotorschere aufgegeben. Bei dieser ersten Zerkleinerung werden größere Stücke auf ca. 20 mm Stückgröße zerkleinert. Durch einen induktiven Metallsensor ist sicherzustellen, daß keine massiven, großen Metallteile (Hammerköpfe etc.) in die Zerkleinerungsmaschine geraten. Hinter dem ersten Zerkleinerungsschritt befindet sich zur Fe-Abscheidung ein Überbandmagnet und daran anschließend eine Nichteisenmetall-Abscheidung. Nach Separation der Metallteile (Fe-Konzentrat I und Nichteisenmetall-Konzentrat I) wird die nicht abgeschiedene Fraktion der zweiten Zerkleinerungsstufe, einer Hammermühle, aufgegeben. Es erfolgt eine Zerkleinerung etwa auf < 10 mm. Hinter dem Zerkleinerungsaggregat ist wiederum eine Magnetscheidung vorgesehen. Es wird ein Fe-Konzentrat II abgezogen. Die nichtabgeschiedene Fraktion wird in zwei Fraktionen kassiert. Eine Fraktion hat etwa die Körnung 5 - 10 mm, die andere < 5 mm. Die Siebfraktionen werden getrennt einer Nichteisenmetall-Abscheidung (NE-Abscheidung) aufgegeben. Hierfür sind Lufttrennherde vorgesehen. Die Fraktion < 5 mm wird vor der Beaufschlagung noch gesichtet. Hierdurch wird der NE-arme Leichtgutanteil ausgehalten und nur der Schwergutanteil (SG) dem Lufttrennherd aufgegeben. Es werden die Konzentrate NE II und NE III gewonnen.

Das übrige 5 - 10 mm große Material wird zum Massenstrom vor der zweiten Zerkleinerung zurückgeführt. Das Material < 5 mm wird einer dritten Zerkleinerungsstufe, einer Hammermühle, aufgegeben. Dieser Verfahrensschritt beinhaltet zwei Zielsetzungen. Das Material muß auf etwa < 2 mm zerkleinert und gleichzeitig müssen die enthaltenen Kupferlitzen und -drähte verkugelt werden. Durch diese Maßnahme werden die Kupferbestandteile für eine erfolgreiche Abtrennung am Lufttrennherd vorbereitet.

Nach einer weiteren Magnetscheidung (Fe-Konzentrat 4) findet diese NE-Sortierung auf einem Lufttrennherd statt. Ein NE-Konzentrat IV wird abgezogen. Übrig bleibt ein Reststoff, der für eine thermische Verwertung vorzusehen ist.

Nach dem Ausführungsbeispiel wurde eine Probe Shredderleichtfraktion mit den üblichen typischen Eigenschaften aufbereitet. Der D₈₀-Wert lag bei 21 mm. Das Schüttgewicht der Probe lag bei 255 kg/m³. Der Feuchtegehalt der ca. 10 t umfassenden Ausgangsprobe lag bei 12,5 %. Der Eisenanteil (Fe-Gehalt absolut) lag bei 13,5 %. Von diesem Anteil befanden sich 41 % im Korngrößenbereich < 1 mm. Der Aschegehalt lag bei 61,4 %, der untere Heizwert bei 9,8 MJ/kg. Für die Beurteilung des Aufbereitungserfolges ist für eine thermisch zu verwertende Fraktion vor allem der Buntmetallgehalt wichtig. Da von den Buntmetallen der Kupfergehalt von herausragender Bedeutung ist, wurde dieser als Leitparameter herangezogen. Außerdem spielt der Chlorgehalt u. a. aufgrund seiner korrosiven Wirkung eine besondere Rolle. Dieser Parameter wurde daher als zweiter Leitparameter gewählt. In einem Pilotversuch wurden beispielhaft ca. 7,5 t der Shredderleichtfraktion nach dem beschriebenen Verfahren aufbereitet und dabei die in *Tabelle 1* dargestellten Ergebnisse erreicht.

Das Fe-Konzentrat I liegt in einem Korngrößenbereich von etwa 20 mm - 200 mm vor. Das Fe-Konzentrat II besitzt Korngrößen im Bereich von ca. 5 mm - 20 mm. Die NE-Konzentrate können z. T. noch in einer weiteren Verfahrensstufe von mitausgetragenen Störstoffen (vor allem Glas, Steinen, aber auch chlorhaltige Fraktionen) befreit werden, womit ihr Wert gesteigert werden kann.

Der Versuch wurde in einer Anlage mit einem kontinuierlichen Durchsatz von 330 kg/h in mehreren Tagen gefahren und in regelmäßigen Abständen Proben aus dem laufenden Versuch gezogen, die dann zu Durchschnittsproben vereint wurden.

**Tabelle 1**

| **Ergebnisse eines Aufbereitungsversuches** | | | | | |
|---|---|---|---|---|---|
| | **Produkte** | **Gehalt** | | | |
| | **Menge (kg)** | **Anteil (%)** | **Cu (%)** | **Cl (%)** | **Heizwert Hu (%)** |
| **Aufgabe** | 7441 | 100 | 2,26 | 2,48 | 9,1 |
| **Fe-Konz. I** | 37 | 0,5 | | | |
| **Fe-Konz. II** | 386 | 5,2 | | | |
| **Fe-Konz. Gesamt** | 423 | 5,7 | | | |
| **NE-Konz. I** | 491 | 6,6 | | | |
| **NE-Konz. II** | 421 | 5,7 | | | |
| **NE-Konz. III** | 70 | 0,9 | | | |
| **NE-Konz. IV (Vorprod.)** | 216 | 2,9 | 7,90 | | |
| **NE-Konz. Gesamt (ohne NE-IV)** | 982 | 13,2 | | | |
| **Reststoff Gesamt** | 5833 | 78,4 | 0,23 | 0,66 | 9,9 |

Mit 0,23 % Cu und 0,66 % Cl wurde bei diesem Versuch ein sehr guter Aufbereitungserfolg erzielt. Ca. 80 % des Inputmaterials wurden als Reststofffraktion erhalten. Von den insgesamt 17 % NE-Konzentraten kann ein Teil noch nachbereitet werden, wodurch sein Wert erheblich gesteigert werden kann. Dies geschieht mittels einer Auftrennung in ein NE-Metallkonzentrat und einen zu entsorgenden Reststoff am Lufttrennherd. Nach den Versuchen ergibt sich - wiederum am Leitparameter Kupfer festgemacht - folgende Qualitätsverbesserung:

Ein NE-I-Produkt hatte einen Cu-Gehalt von 21,5 %. Mittels Lufttrennherd konnten ca. 50 % des Materials mit einem Cu-Gehalt von 57,2 % abgetrennt werden. Ein NE-II-Produkt aus demselben Versuch hatte einen Cu-Gehalt von 11,8 %. Mittels Lufttrennherd konnten knapp 60 % mit einem Cu-Gehalt von 44,5 % abgetrennt werden. Mit NE-III kann eine ähnliche Produktverbesserung erreicht werden. Mit einem NE-IV-Produkt ist ebenso eine Verbesserung möglich. Von 7,9 % Cu-Gehalt in einem Produktbeispiel konnte ein Konzentrat mit einem Gehalt von 46 % Cu-Gehalt erzeugt werden.

Aber auch mit dem Reststoffmaterial ist eine weitere Produktverbesserung möglich, wenn das Material einem speziellen Lufttrennherd der Firma Redoma aufgegeben und ein Kupferkonzentrat separiert wird. Während die Menge des aufgefangenen Kupferkonzentrats selbst zu gering ist und in der Bilanz keine Rolle spielt, so wurde jedoch in zwei Beispielen aus Teilströmen der Reststofffraktionen der Kupfergehalt von 1,01 % auf 0,06 % und von 0,43 % und 0,06 % gesenkt. Insgesamt verbessert sich die Qualität des Mischreststoffes von 23 % auf einen Cu-Gehalt von 0,15 %.

Eine Verfahrensvereinfachung ist möglich, wenn besser ausgelegte Zerkleinerungsmaschinen gewählt und diese besser aufeinander abgestimmt werden. Dann kann die dritte Aufbereitungsstufe entfallen.

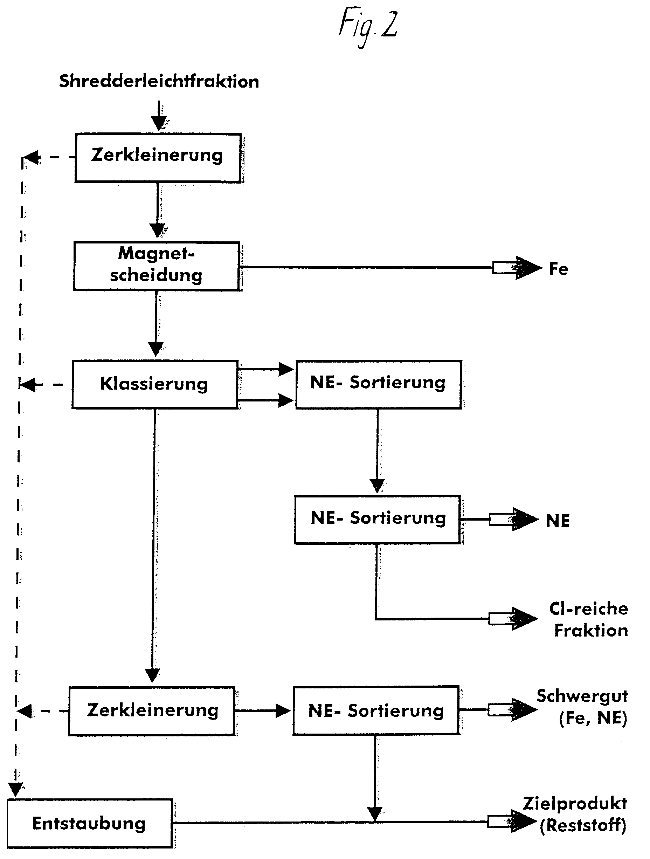

Das Blockschaltbild einer solchen Anlage zur Aufbereitung der Shredderleichtfraktion ist in Fig. 2 dargestellt. Danach wird die Shredderleichtfraktion über einen Aufgabeförderer einer Vorzerkleinerung zugeführt. Daran schließt sich eine Fe-Metallseparation an, bei der die gröberen Eisenteile abgetrennt werden. Hieran kann sich eine Nichteisenmetall-Abtrennung anschließen, wenn der NE-Anteil mit einer Korngröße von > 5 mm - 100 mm in lohnendem Anteil vorhanden ist. Dieser Verfahrensschritt ist in Fig. 2 nicht eingezeichnet. Es schließt sich eine mehrstufige Siebklassierung an. Die einzelnen Siebfraktionen haben Korngrößenbereiche von > 20 mm, 10 mm - 20 mm und < 10 mm. Je nach Verwendungszweck der Produkte ist ein weiterer Klassierschritt möglich. Für einen Einsatz der Reststofffraktion im Hochofen, aber auch einen im Zementdrehrohrofen, wird ein hoher Heizwert angestrebt. Zusätzlich stören Alkalimetallanteile im Hochofen oder anderen Anlagen der Eisen- und Stahlerzeugung.

Es ist dann zweckmäßig, nach der Vorzerkleinerung bei der Siebklassierung zusätzlich eine Fraktion Feinkorn (etwa < 1 mm) abzutrennen. Von diesem Feinkorn kann durch Sichterprozesse der organische Anteil (heizwertreich) vom vorwiegend anorganischen Anteil (mit hohem Anteil an Glasbruchstücken, Steinen, Erde, Dreck und Eisen, überwiegend in oxidierter Form) abgetrennt werden. Dadurch werden ca. 5 - 10 % des Inputmaterials separiert und müssen deponiert oder anders entsorgt werden. Nach den Versuchsergebnissen erfüllt dieser Material nicht alle Anforderungen an die üblichen Richtlinien für eine Verbrennung, daher ist auch eine Eignung einer solchen Feinkornfraktion als Untertageversatz denkbar.

Der Vorteil dieser Maßnahmen liegt in der Reduzierung des Alkalianteils in der thermisch zu verwertenden Fraktion bei einem Hochofeneinsatz sowie in der Erhöhung des Heizwertes. Ein weiterer Vorteil liegt in der Verringerung der Verschleißteilkosten der Anlagenkomponenten durch frühzeitiges Entfernen von abrasivem und damit verschleißförderndem Material, wie Glas, Sand und Steinen.

Beim Einsatz der Reststofffraktion in einer Müllverbrennungsanlage wird gerade der eben beschriebene Separationsschritt nicht betrieben werden, weil dort ein geringerer Heizwert erforderlich ist und weil der Glasanteil einen willkommenen potentiellen Schlackebildner darstellt. Bei dem 2. Verfahrensschritt im Verfahrensstammbaum Fig. 2 werden die Teilströme > 20 mm und 10 - 20 mm getrennt jeweils einem Trennherd zugeführt, in dem die Abtrennung der NE-Konzentrate erfolgt. Das nicht abgetrennte Leichtgut wird dem Stoffstrom < 10 mm zugegeben und weiter zerkleinert. In diesem Zerkleinerungsschritt erfolgt nicht nur ein Aufschluß von Metallteilchen, sondern gleichzeitig eine Verkugelung der Kupferlitzen und Kupferdrähte als Vorbereitung für eine anschließende Abtrennung auf dem Trennherd. Das Leichtgut dieses Trennprozesses wird mit dem Filterstaub zusammengemischt und stellt das Produkt für die thermische Verwertung dar. Je nach Verwertungsprozeß kann ein Konditionierung in Form einer Granulierung oder ein Verpressen notwendig sein.

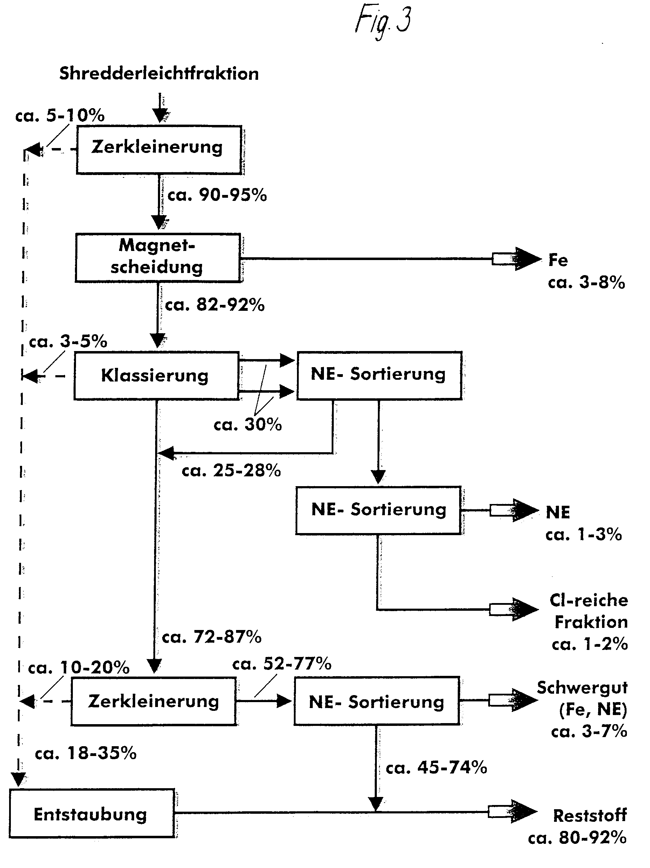

In Fig. 3 ist anhand des Blockschaltbildes die angenommene Produktverteilung dargestellt. Dabei ist zu beachten, daß aufgrund der stark schwankenden Zusammensetzung des Ausgangsmaterials an dieser Stelle nur Angaben mit relativ großer Schwankungsbreite gemacht werden können.

## Patentansprüche

1. Verfahren zur Aufbereitung einer Shredderleichtfraktion mit Metallteilen mittels Zerkleinerung, Klassierung und Sortierung für eine thermische Verwertung, dadurch gekennzeichnet, daß
- eine Shredderleichtfraktion, bestehend aus einem undefinierten Materialgemisch einer Zerkleinerungsstufe ≤ 20 mm aufgegeben wird,
- die Zerkleinerungsprodukte zunächst einer Fe-Abscheidung und danach einer NE-Abscheidung unterzogen werden,
- die nichtabgeschiedene Fraktion solange einer weiteren Zerkleinerungsstufe mit anschließender Fe-Abscheidung und anschließender NE-Abscheidung unterzogen wird, bis
- neben Fe- und NE-Konzentraten ein Reststoff entsteht, der einer thermischen Verwertung zugeführt werden kann.

2. Verfahren nach Anspruch 1, dadurch gekennzeichnet, daß
3 Zerkleinerungsstufen mit anschließender Fe- und NE-Abscheidung hintereinander geschaltet sind.

3. Verfahren nach den Ansprüchen 1 und 2,
dadurch gekennzeichnet, daß
vor der ersten Zerkleinerungsstufe größere Metallteile ausgehalten werden.

4. Verfahren nach den Ansprüchen 1 bis 3,
dadurch gekennzeichnet, daß
die abgeschiedenen Fe-Produkte weiter angereichert werden.

5. Verfahren nach den Ansprüchen 1 bis 4,
dadurch gekennzeichnet, daß
die abgeschiedenen NE-Produkte weiter angereichert werden.

6. Verfahren nach den Ansprüchen 1 bis 5,
dadurch gekennzeichnet, daß
die zweite Zerkleinerungsstufe bei ≤ 10 mm erfolgt.

7. Verfahren nach den Ansprüchen 1 bis 6,
dadurch gekennzeichnet, daß
die dritte Zerkleinerungsstufe auf ≤ 2 mm erfolgt.

8. Verfahren nach den Ansprüchen 1 bis 7,
dadurch gekennzeichnet, daß
vor der NE-Anreicherung eine Klassierung erfolgt.

9. Verfahren nach Anspruch 7, dadurch gekennzeichnet, daß
die Klassierung bei 5 mm erfolgt.

10. Verfahren nach den Ansprüchen 1 bis 9,
dadurch gekennzeichnet, daß
vor der NE-Anreicherung ein Sichtungsprozeß erfolgt.

11. Verfahren nach den Ansprüchen 1 bis 10,
dadurch gekennzeichnet ,daß
die Entstaubungsprodukte aus der Zerkleinerung und der Klassierung mit den weiteren Produkten aus dem Verfahren einer thermischen Verwertung zugeführt werden.

12. Vorrichtung zur Durchführung eines Verfahrens nach den Ansprüchen 1 bis 11, dadurch gekennzeichnet, daß
ein Förderer zur Zuführung einer Shredderleichtfraktion in ein Zerkleinerungsaggregat dient,
- dem Zerkleinerungsaggregat ein Magnetscheider und ein NE-Abscheider nachgeschaltet sind
- und mindestens ein Aggregat zur thermischen Verwertung der Reststoffe vorhanden ist.

13. Vorrichtung nach Anspruch 12, dadurch gekennzeichnet, daß
3 Zerkleinerungsaggregate zur stufenweisen Zerkleinerung hintereinandergeschaltet sind.

14. Vorrichtung nach den Ansprüchen 12 und 13,
dadurch gekennzeichnet, daß
als Förderer in das Zerkleinerungsaggregat ein Scharniergutförderer vorgesehen ist.

15. Vorrichtung nach den Ansprüchen 12 bis 14,
dadurch gekennzeichnet, daß
am Scharniergutförderer ein induktiver Metallsensor angeordnet ist.

16. Vorrichtung nach den Ansprüchen 12 bis 15,
dadurch gekennzeichnet, daß
die erste Zerkleinerungsstufe eine Rotorschere darstellt.

17. Vorrichtung nach den Ansprüchen 12 bis 16,
dadurch gekennzeichnet, daß
die erste Zerkleinerungsstufe ein Universalgranulator darstellt.

18. Vorrichtung nach den Ansprüchen 12 bis 17,
dadurch gekennzeichnet, daß
zur Fe-Abscheidung ein Überbandmagnet angewendet wird.

19. Vorrichtung nach einem oder mehreren der Ansprüche 12 bis 18,
dadurch gekennzeichnet, daß
dem Lufttrennherd eine Sichtklassierung vorgeschaltet ist.

20. Vorrichtung nach einem oder mehreren der Ansprüche 12 bis 19,
dadurch gekennzeichnet, daß
die NE-Abscheidung und -Konzentration mittels Lufttrennherd erfolgt.

21. Vorrichtung nach einem oder mehreren der Ansprüche 12 bis 20,
dadurch gekennzeichnet, daß
vor dem Lufttrennherd ein Sichter angeordnet ist und nur das Schwergut dem Lufttrennherd aufgegeben wird.

22. Vorrichtung nach einem oder mehreren der Ansprüche 12 bis 21,
dadurch gekennzeichnet, daß
die zweite und dritte Zerkleinerungsstufe eine Hammermühle darstellt.
